# EUROPEAN PATENT APPLICATION

(11) **EP 1 364 580 A1**
(43) Date of publication of application: **26.11.2003**
(21) Application number: 03011419.3
(22) Date of filing: 20.05.2003
(51) Int. Cl.: A22B 7/00

(54) **Process for treatment and disposal of organic proteic mass of animal origin and related equipment**

(30) Priority: 20.05.2002 EP 02425316
(71) Applicant: Eco-Tec Future Energy Tecnology - S.r.l., 39100 Bolzano (IT)
(72) Inventor: Bruno, Sanelli, 66016 Montesilvano (Pescara) (IT)
(74) Representative: Tansini, Elio Fabrizio

(57) **Abstract**

It is disclosed a process for treatment and disposal of an organic protein mass comprising waste from slaughtering and/or protein meals, said process comprising elimination of the mineral salts from the protein mass and the fat mass which are employed as a combustible emulsion, as well as the equipment for utilisation of same.

## Description

The present invention relates to a process for treatment of an organic protein mass of animal origin, as well as to the equipment to be used for putting said process into effect. In particular, the present invention relates to a process for disposal of protein meals and/or waste from slaughtering mostly consisting of carcasses of slaughtered animals for human nourishment, and to the related equipment to be used for putting said process into effect.

Based on some known treatment processes, the organic protein mass of animal origin from slaughtering waste is treated by a first crushing step to obtain a uniform mass.

The crushed (ground) mass is submitted to a fat-extraction step through use of pressure and temperature, in an autoclave for example or, alternatively, with appropriate solvents (drying-extraction process). Alternatively, the ground and dried mass can be pressed at high pressures (pressing process).

The pressing process enables final products to be obtained that consist of about 8% by weight of fats, about 10% by weight of H₂O and about 35% by weight of proteins mixed with about 35% by weight of mineral salts.

In the pressing process, a partial extraction of the fat contained in said organic protein mass is achieved. In addition, a prolonged use in time of high pressure values during the pressing step causes decay of the obtained fat material which cannot be utilised any longer for food uses.

The drying-extraction process to be carried out through appropriate solvents on the contrary enables an almost complete extraction of the animal fat. The obtained fat is of good quality and therefore can be addressed to industrial uses or food uses.

In addition, obtained from the drying-extraction process is a product containing about 40% by weight of proteins mixed with about 30% by weight of salts contained in the slaughtered animal bones (protein meal).

It is known that once animal protein meal was utilised in bovine feeding but, after spreading of the mad cow disease, it can no longer be employed in cattle breeding and therefore it is necessary to completely dispose of it.

Among the methods adopted for disposing of a product that, as above said, contains about 30-40% by weight of proteins kneaded or mixed with about 30-40% by weight of mineral salts (and a varying amount of fat mass), it is worthwhile mentioning burning in furnaces.

However, this method suffers from some drawbacks.

A first drawback resides in that the product submitted to combustion needs high temperatures so as to be burnt. Said high temperatures can be obtained by a great waste of energy.

A second drawback resides in that the product submitted to combustion leaves a residue of unburnt compounds (ashes) consisting of mineral salts present in an amount included between 30 and 40% by weight with respect to the overall weight of the product.

A further drawback is represented by the fact that there is a minimum energy recovery from combustion of the product, which discourages the development of this method of disposal.

In addition, ashes obtained from combustion are no longer usable as a raw material to be recycled, as fertilising manure for example.

Finally, it should be remembered that in the drying-extraction process the required high temperatures for carrying out the first drying step and possibly the subsequent step involving extraction by steam, cause denaturation of the proteins present in the animal waste material with formation, in protein meals too, of protein polymers that make it impossible to completely burn the obtained products even to temperatures beyond 1000°C. Consequently, by operating to such temperatures, the necessary energy amount for combustion of the protein polymers that under these conditions will never be complete, is at least identical with or even higher than the energy to be recovered from combustion in heating plants or from steam; therefore the whole process is not economically very advantageous because it is energetically negative.

For the above reason, only on the Italian territory more than 400,000 metric tons of animal protein meals have been accumulated.

The animal protein meals are also very favourable substrates for bacterial fermentation and development of fungi and moulds and therefore they are potentially polluting for the environment and pathogenic for the human beings.

It is generally known that the organic protein mass of animal origin coming from animal slaughtering fundamentally comprises two fractions.

A first fraction called "wet" fraction comprises the slaughtered animal carcasses, entrails (viscera), cartilagines, blood and others.

A second fraction called "dry" fraction comprises animal meals, in particular protein meals.

A research in the field of animal waste disposal has made attempts since long to find a process enabling the waste from slaughtering and/or animal meals to be fully disposed of.

Some known methods allow separation of the different components (fats, proteins, salts) to be obtained. Other known methods enable final products to be obtained that can only be used for some industrial purposes.

Therefore there is a need for a method of treatment and disposal of an organic protein mass of animal origin that is devoid of the drawbacks present in the known art.

An industrial process for treatment of an organic protein mass of animal origin, comprising slaughtering waste and/or protein meals, has been now surprising found that enables the protein component and fat component to be separated from the mineral salts contained in said organic protein mass.

Advantageously, burning of the obtained protein component and/or fat component leaves a residue of unburst compounds (ashes) consisting of mineral salts in an amount lower than 1% by weight, with respect to the overall weight of the burnt component.

It is a first object of the present invention to provide a process for treatment of an organic protein mass of animal origin the features of which are set out in the appended independent claim.

It is another object of the present invention to provide an equipment for carrying the process into effect the features of which are set out in the appended independent claim.

Advantageously, the process involves working of the organic protein mass by use of temperature, pressure and hydrolysis in an aqueous solution that allows formation of macromolecules (protein polymers of high molecular weight, for example) to be inhibited by producing a combustible protein component (devoid of salts) and a combustible fat component (devoid of salts) with a positive energy return at the end of said disposal process in a burner.

Said protein component comprises protein fractions having an average molecular weight smaller than 10,000 Daltons.

For instance, by way of example only, the process in accordance with the invention comprises the following steps:
a) hydrolysing the organic protein mass to obtain at least one first separation of the protein component, the fat component and the saline component that constitute said organic protein mass;
b) physically separating the protein component, fat component, saline component and aqueous component;
c) treating the protein component comprising a protein mass, residues of fat mass and residues of mineral salts;
d) recovering the protein mass;
e) treating the fat component comprising a fat mass, residues of protein mass and residues of mineral salts;
f) recovering the fat mass;
g) treating the saline component comprising residues of protein mass and residues of fat mass;
h) recovering the mineral salts;
i) treating and recovering the aqueous phase comprising residues of protein mass, residues of fat mass and residues of mineral salts;
j) burning the emulsion formed of a mixture of the protein mass and/or fat mass previously recovered in d) and f).

The physical separation described in step b) gives rise to a mixture that, if it is allowed to stand, leads to a physical separation of four distinct components, of which:
- a lighter component (an aqueous phase);
- a second component consisting of an aqueous phase containing solubilized proteins at the rate of 90% by weight of the amount of starting proteins. In this (component) fraction proteins have a molecular weight smaller than 10,000 Daltons. The remaining portion, about 10% by weight of the starting-protein amount, is a protein fraction having an average molecular weight included between 10,000 and 20,000 Daltons, from 12,000 to 16,000 Daltons for example, depending on the biological features of the starting protein mass.

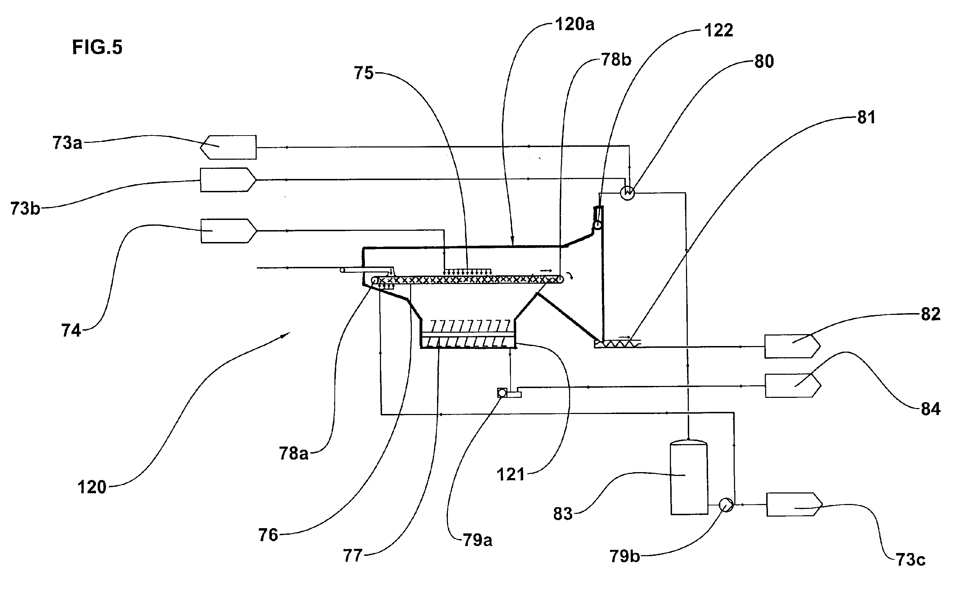

Alternatively, in a preferred embodiment, after the above described step a), in the process of the present invention a step of pre-separating the saline phase having a particle size larger than 1 mm (Fig. 5) is provided.

Said pre-separation produces two phases: component 1 consisting of a liquid phase containing phosphate salts with a particle size smaller than 1 mm and component 2 consisting of a solid phase containing phosphate salts having a particle size larger than 1 mm.

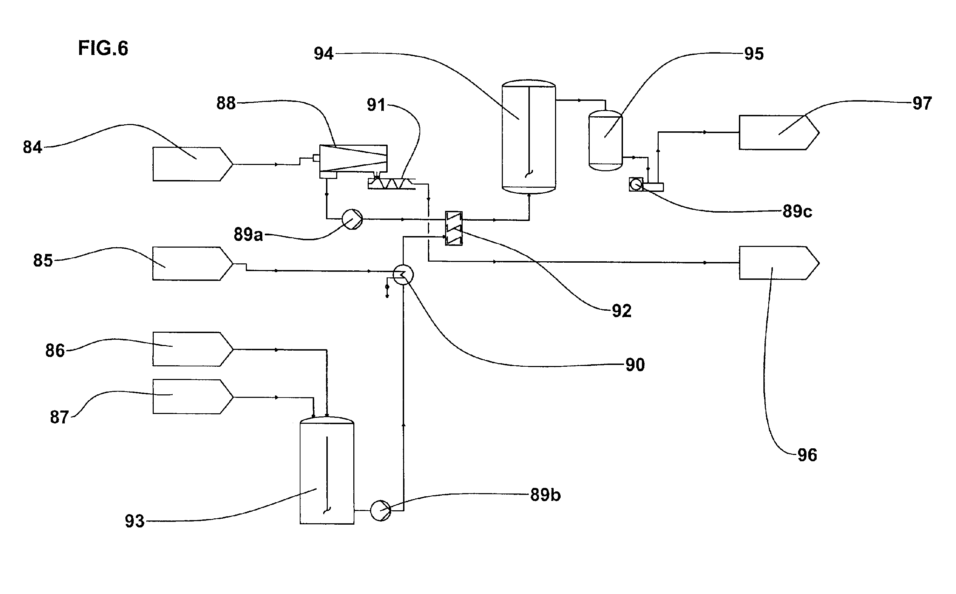

Subsequently, the mixture from the fusion-cleavage treatment and from hydrolysis and devoid of component 2 is submitted to a further separation carried out by a centrifugal separator such as a two-phase decanter (Fig. 6). Two components are obtained from the centrifugal separator: component 1A represented by an organic-protein and fat phase and component 2A represented by phosphate salts.

Subsequently, component 1A is submitted to a deproteinizing step (Fig. 6). Practically, the organic protein and fat phase is treated with a deproteinizing agent, an acid substance such as the oxalic acid, for example.

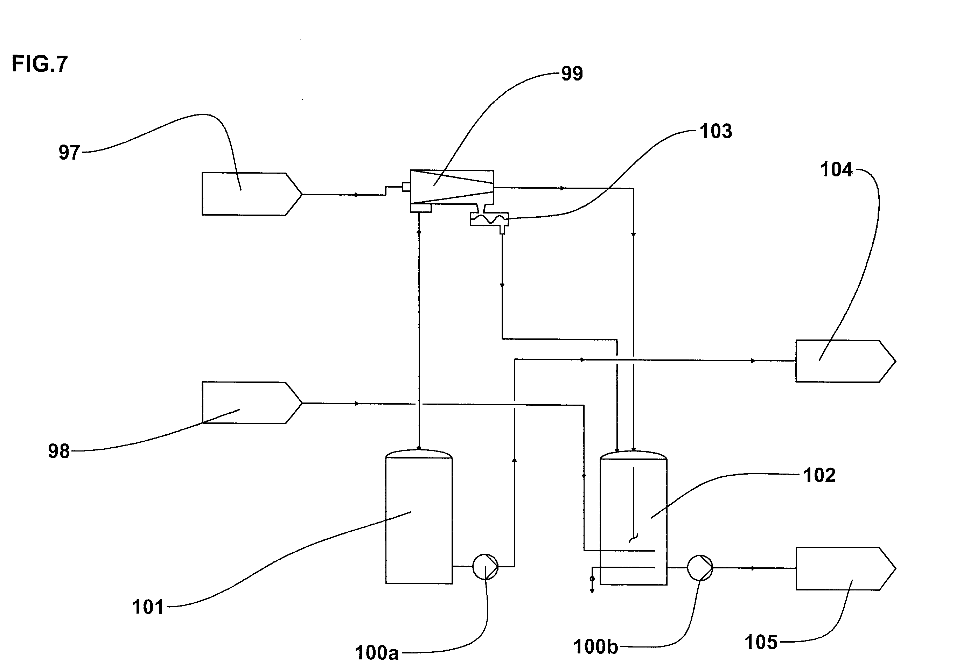

After the deproteinizing step, component 1A is directed to a centrifugal separator such as a three-phase decanter for separation of the proteins (component A, organic protein phase), the fats (component B, fat phase) and water (component C, aqueous phase) (Fig. 7).

The process in accordance with the invention will be now illustrated in more detail with reference to the accompanying drawings, given by way of non-limiting example only, in which:
- Fig. 1 is a diagrammatic illustration for obtaining the protein component, fat component, saline component and aqueous component;
- Fig. 2 is a diagrammatic illustration for treatment of the protein component;
- Fig. 3 is a diagrammatic illustration for treatment of the fat component;
- Fig. 4 is a diagrammatic illustration for treatment of the saline component;
- Fig. 5 is a diagrammatic illustration showing separation of the phosphate salts having a particle size larger than 1 mm;
- Fig. 6 is a diagrammatic illustration showing a separation carried out in a centrifugal separator such as a two-phase decanter and a deproteinizing step;
- Fig. 7 is a diagrammatic illustration of a separation carried out in a centrifugal separator such as a three-phase decanter.

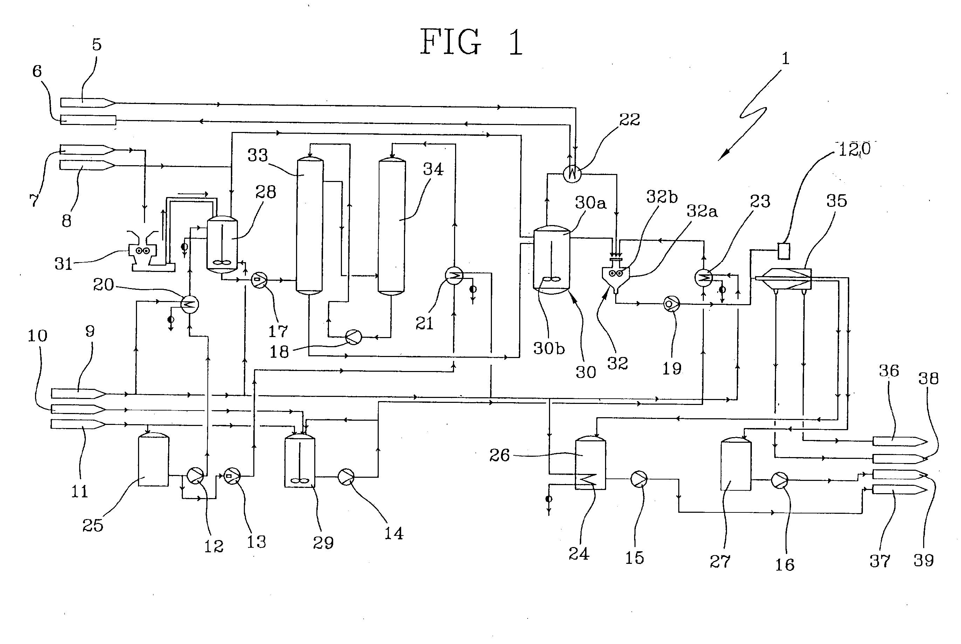

With reference to Fig. 1 the following equipment parts are identified:
- water from a supply 5;
- water directed to a storage source 6;
- waste from slaughtering "wet fraction" 7;
- protein meals "dry fraction" 8;
- one steam source 9;
- means containing an acid aqueous solution 10;
- process water 11;
- pumping means 12, 13, 14, 15, 16, 17, 18 and 19;
- heat-exchanger means 20, 21, 22, 23, 24;
- containing means 25, 26 and 27;
- mixing means 28, 29 and 30;
- grinding/crushing means 31 and 32;
- means for carrying out a digestion of the organic protein mass 33 and 34 (fusion-cleavage system);
- separation means 35;
- means for containing the protein component 36;
- means for containing the fat component 37;
- means for containing the saline component 38;
- means for containing the aqueous component 39.

Preferably, the waste from slaughtering "wet fraction" 7 is submitted to a first grinding or crushing step using the grinding means 31 thereby obtaining bone crushing and meat grinding. From grinder 31 a uniform "wet" feed mass is obtained.

From the grinding means 31, the uniform mass obtained is sent to a dilution apparatus 28. For example, the dilution apparatus 28 comprises a container 28a, an aqueous solution and stirring elements 28b.

In a preferred embodiment, the animal protein meals 8 are sent to a dilution apparatus 28.

The dilution apparatus 28 is provided with stirring means 28b and a steam heating system 20. Therefore a suitable amount of H₂O is added, which is taken from a tank 25 through a pump 12, heated in the heat-exchanger 20. Subsequently, the uniform aqueous mass also containing bone fragments is mixed until a homogeneous mixture (homogenisation step) is obtained. The necessary H₂O volume for this process step of the present invention is obviously a function of the initial slaughtering product that may also all consist of the "dry" fraction (protein meal). In case of treatment of the protein meal 18, it can obviously be directly introduced into the dilution apparatus 28 because grinding is not required.

Alternatively, the protein meal 8 can be introduced into the mixing means 30.

The homogeneous mixture thus obtained is drawn from the dilution apparatus 28 by a pump 17 and pushed, at the process pressure, into the fusion-cleavage system 33 and 34 into which a suitable amount of H₂O is countercurrent introduced, by a high-pressure pump 13. The admitted water amount is about 10% in volume with respect to the amount of the treated mixture. The admitted water amount is suitably heated to a temperature in the range of 110 to 160°C. In said fusion-cleavage system 33 and 34 separation of at least one protein component, at least one fat component and at least one saline component takes place. The saline component mainly consists of calcium phosphates present in bones, which salts will be dispersed in the process water in a more or less homogeneous manner.

Advantageously, the countercurrent and high-pressure mixture heating does not cause formation of incombustible protein polymers and, in addition, does not modify the quality of the obtainable fat due to the high speed at which it takes place. In addition, by effect of pressure that can reach a value included between 20 and 30 bars, the obtained mixture can enter the expander 30 where an adiabatic cooling takes place together with lowering of the mass temperature and evaporation of the water that can be partly recovered by condensing in condenser 22 and sent back to mixer 32 into which the mixture is also introduced.
The last-mentioned fine mixer (homogeniser) 32 aims at reducing the treated-mixture constituents into very small fragments and therefore carrying out a perfect homogenisation of same which will then be treated with a solution comprising an acid substance.

Preferably, the acid substances are selected from the organic and/or inorganic acids such as citric, acetic, oxalic and phosphoric acids, for example. Advantageously, citric acid is employed. Preferably, the acid solution is heated and has a pH value included from 4 to 6.5; more preferably from 5 to 6.

For example, the acid solution is prepared in a mixer 29, drawn by a pump 14 and heated in a heat exchanger 23. Addition of the hot acid aqueous solution aims at maintaining the protein component, fat component and saline component forming the organic protein mass dispersed and separated (demulsification) in water. Furthermore, addition of the acid aqueous solution enables the polymeric chains to be broken up thereby preventing formation of incombustible protein polymers.

In a preferred embodiment of the present invention, a pump draws the demulsified (hydrolysed) mixture from mixer 32 and sends it to a separator 35, preferably a centrifugal separator of the decanter type, capable of carrying out physical separation of the following components:
a) a protein component comprising a protein mass, residues of fat mass and residues of mineral salts;
b) a fat component comprising a fat mass, residues of protein mass and residues of mineral salts;
c) a saline component comprising mineral salts such as phosphate salts for example;
d) an aqueous component comprising residues of protein mass, residues of fat mass and residues of mineral salts.

Preferably, the protein mass comprises proteins and water in a ratio by weight included between 1:10 and 10:1, more preferably between 1:5 and 5:1.

Preferably, the fat mass comprises fats and impurities in a ratio by weight in the range of 1:10 to 10:1, more preferably of 1:5 to 5:1.

Preferably, the mineral salts comprise phosphate salts in a mixture with water in a ratio by weight included between 1:5 and 5:1, more preferably in the range of 1:3 to 3:1.

Advantageously, the above described components a), b), c) and d) are destined to the subsequent purification treatments which differentiate from each other depending on the individual components.

Advantageously, the above described process can be used for treatment of a mixture comprising waste from slaughtering and animal protein meals in any ratio relative to each other.

In a second preferred embodiment of the present invention a pump draws the demulsified (hydrolysed) from mixer 32 and sends it to separator XXX capable of making a physical separation of the phosphate salts having a particle size larger than 1 mm.

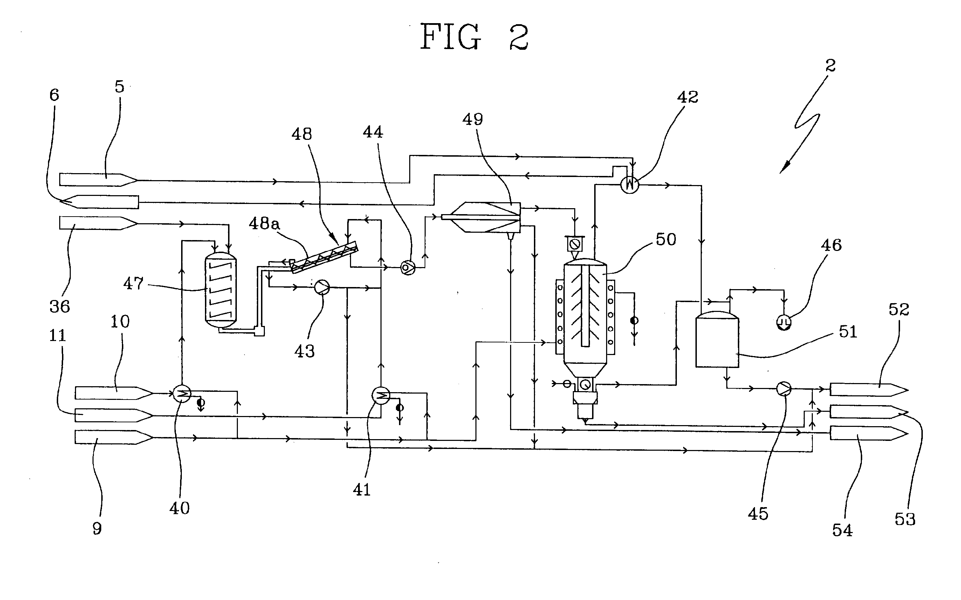

With reference to Fig. 2, the following equipment parts are identified:
- water from a supply 5;
- water directed to a storage source 6;
- protein component to be treated 36;
- one steam source 9;
- containing means for a source of an acid aqueous solution 10;
- process water 11;
- heat exchanger means 40, 41 and 42;
- pumping means 43, 44 and 45;
- vacuum pumping means 46;
- mixing means 47;
- countercurrent washing apparatus 48;
- separation means 49;
- drying means 50;
- containing means 51;
- process water intended for biological purification 52;
- protein mass 53;
- residues of mineral salts 54.

In accordance with the process of the present invention, treatment of the protein component 36 takes place in an appropriate mixer 47 into which the protein component from the centrifugal separator 35 is introduced.

Further added in mixer 47 is a solution comprising an acid substance drawn from container 10. Preferably citric acid is employed to obtain a pH value included between 4 and 6.5, preferably in the range of 5 to 6.

The acid solution 10 is previously heated by a heat exchanger 40.

Archimedean-screw transportation means 48a transfer the homogeneous acidified paste thus obtained to the washing system with an appropriate amount of countercurrent hot water 48. Washing takes place in the washing apparatus 48 through the water drawn from tank 25, heated with a heat exchanger 41 and recirculated in said washing system 48 by means of pump 43. While the washing waters, after a certain number of recirculation cycles, will be sent to the purification apparatus, the protein component comprising a protein solution in an aqueous phase thus obtained is sent by a pump 44 to a separator 49; preferably it is a centrifugal separator of the decanter type capable of separating the washed protein mass from the residual phosphate salts 54 (incorporated in the proteins) and from the waste waters 52. The waste waters 52 after biological purification can be recycled.

The protein mass contains water in an amount by weight included between 20 and 40%, preferably in an amount of 25 to 35%.

The mineral salts contain water in an amount by weight included between 15 and 40%, preferably in an amount in the range of 20 to 30%.

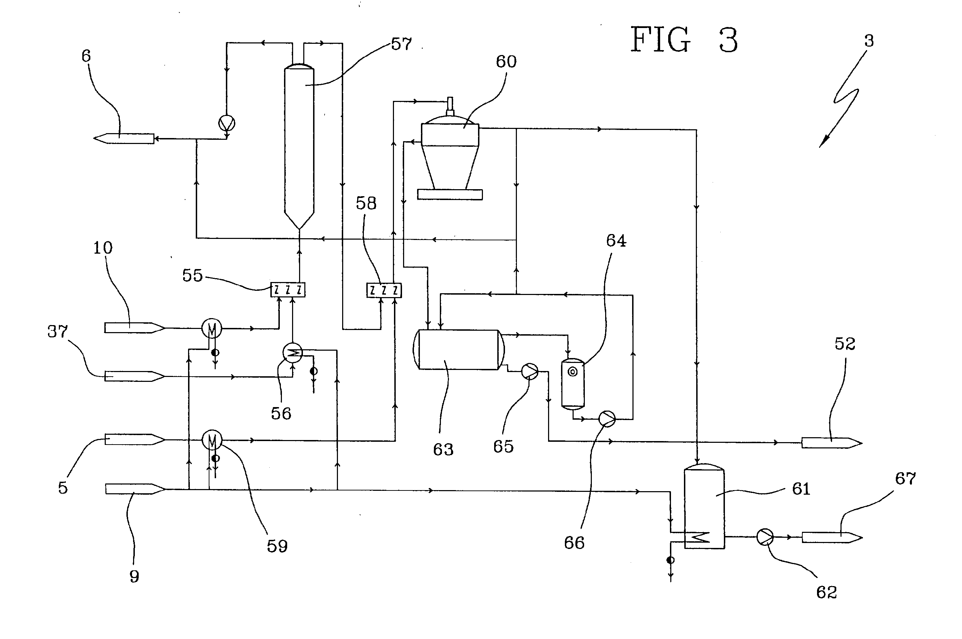

The obtained phosphate salts 54 are sent, through Archimedean-screw transportation, together with the salts from the first centrifugal separator 35, to a vacuum drying system (Fig. 3), thereby obtaining full drying of the mineral salts, and they can then be sent from drier 67 to the storage container 69 (Fig. 3).

Advantageously, the salts obtained by the process of the present invention can be sold as raw materials because they are chemically pure and undegraded (calcined). Practically, the obtained salts are not submitted to thermal calcination.

On the contrary, in the treatment methods of the known art the obtained mineral salts, about 27% by weight, remained in a mixed condition with fats and proteins. Such a product if burnt forms ashes that must be sent to a dump for disposal.

The protein phase is sent to a vacuum drier 50 to completely eliminate the water contained therein.

Preferably the protein phase from drier 50 is sent to an apparatus for fuel preparation because the protein mass obtained from the process of the present invention is almost completely devoid of incombustible products (practically devoid of salts and protein polymers). The fuel comprising the protein mass and/or fat mass can be advantageously used in a burner for production of electrical energy thereby obtaining a true disposal of the treated organic protein mass.

With reference to Fig. 3, the following equipment parts are identified:
- water from a supply 5;
- water directed to a storage source 6;
- fat component to be treated 37;
- one steam source 9;
- means containing an acid aqueous solution 10;
- mixing means 55, 58;
- heat exchanger means 56, 59;
- standing means 57;
- centrifugal-separation means 60;
- pumping means 65 and 66;
- means for preparation of a combustible emulsion 67.

According to the process of the present invention the fat component 37 from the centrifugal separator 35 and from tank 26 is sent through pump 15 to mixer 55. Preferably, the fat component 37 is preheated in the heat exchanger 56. Also the acid aqueous solution drawn from container 10 reaches the same mixer 55.

The mixture thus obtained is formed of the fat component and the acid solution. The mixture, after being sent to a standing apparatus 57, is directed to a second mixer 58 into which about 10% by weight of H₂O from tank 5 heated in a heat exchanger 59 flows.

The mass thus worked is poured into a centrifugal separator 60 where the fat mass is separated from water. The washed fat mass is collected in tank 61 and sent, through pump 62, to preparation of fuel 67. Thus a combustible emulsion is obtained which comprises the fat mass and the protein mass in a ratio by weight in the range of 1:10 to 10:1.

Advantageously, the fuel obtained from the present invention can be burnt in a very cheap liquid-boiler.

In addition, the combustible emulsion obtained with the process of the present invention can be advantageously utilised in a thermal way for production of electrical energy because it succeeds in developing about 5700 Kcal/kg during its combustion. Therefore, the process of the present invention constitutes a true system for disposal of animal waste and/or animal meals.

The aqueous phase coming out of the centrifugal separator 60 and the waste water phase obtained in the first centrifugal separator 35 are finally sent to the phase separator 63 where separation by decantation and overflow of the fat matter entrained by the washing waters takes place.

While waters are sent to the purification apparatus 52, the fat matter from overflow will be sent back to the collecting tank 64.

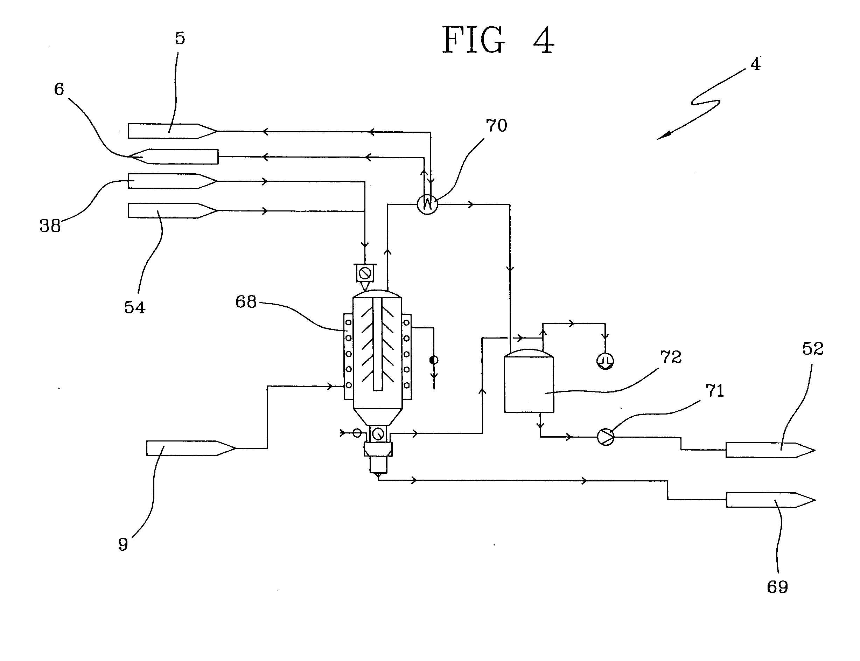

With reference to Fig. 4, it is identified:
- water from a supply 5;
- water directed to a storage source 6;
- saline component to be treated 38;
- mineral-salt residues 54;
- one steam portion 9;
- drying system 68;
- means for preparation of a combustible emulsion 69;
- heat exchanger means 70;
- pumping means 71;
- containing means 72.

The saline component to be treated 38, preferably together with the mineral-salt residues 54, is introduced into the drying system 68. Preferably, drying takes place under vacuum.

With reference to Fig. 5, the parts constituting a device for physical separation identified with 120 in Fig. 1 are stated in detail hereinafter:
- process water 73a, 73b;
- a steam source 74;
- protein component 36, fat component 37, saline component 38 and aqueous component 39 to be treated;
- steam-washing means 75;
- separation means (grid) 76;
- mixing means 77;
- grid-actuating means 78a and 78b;
- pumping means 79a and 79b;
- steam-condensing means 80;
- collecting means 81;
- containing means of component 2, a solid phase containing phosphates with a particle size larger than 2 mm, 82;
- storage tank 83;
- containing means of component 1, a fluid phase containing the organic protein and fat phase, 84.

With reference to Fig. 6, the following parts of the equipment are pointed out:
- containing means of component 1, a fluid phase containing the organic protein and fat phase 84;
- a steam source 85;
- process water 86;
- deproteinizing agent 87;
- a two-phase decanter 88;
- pumping means 89a, 89b and 89c;
- heat exchanger 90;
- transport means 91;
- mixing means 92;
- mixing tank 93 and 94;
- containing means 95;
- means for mineral salt collection 96;
- a three-phase decanter 97.

With reference to Fig. 7, the following parts of the equipment are stated:
- a three-phase decanter 97;
- a steam source 98;
- a three-phase decanter 99;
- pumping means 100a and 100b;
- containing means 101 and 102;
- conveying means 103;
- water-recycling means 105;
- fuel-storage means.

It is a further object of the present invention use of the process for disposal of the organic protein mass for production of electrical energy.

All necessary apparatus for carrying out the process of the present invention are commonly used and are known to those skilled in the art and therefore will not be herein described in detail.

Another object of the present invention consists of an equipment for use of the process as described and claimed in the present invention.

The equipment for treatment of an organic protein mass of animal origin is characterised in that it comprises:
- mixing means 30 for said organic protein mass;
- grinding means 32 for said organic protein mass to carry out hydrolysis of said organic protein mass;
- separation means 35 for the components constituting the organic protein mass;
- a plurality of containers 36, 37, 38, 39 each of which contains a respective component constituting the organic protein mass.

Preferably, said mixing means 30 comprises a container 30a holding said organic protein mass and a rotating propeller 30b in said container 30a to mix said organic protein mass.

Preferably, said grinding means 32 comprises a container 32a for the organic protein mass; an acid solution inserted in said container and at least one Archimedean-screw element 32b rotating in the container.

Preferably, said separation means 35 comprises a rotating container 35a. Preferably, said separation means 35 comprises a centrifugal separator of the decanter type.

By way of non-limiting example only, some embodiments of the present invention are described hereinafter.

### EXAMPLE 1 - Separation of the components constituting the waste matter from animal slaughtering.

A process for treatment of slaughtering waste having the following composition by weight is described (t/y stands for ton/year):
Proteins 32000 t/y (25%);
Fats 21760 t/y (17%);
Soluble salts 2600 t/y (2%);
Phosphate salts 19160 t/y (15%);
Water 52480 t/y (41%).
The composition refers to 128,000 t/y (100%).
This slaughtering waste is ground in a grinder 31 and submitted to fusion-cleavage in apparatus 33 and 34 with 6400 t/y of hot water and subsequently finely ground in grinder 32 to which citric acid in an aqueous solution of 4000 t/y is added.
The four components are separated in separator 35, thereby obtaining the individual components.

| 1. Protein component with the following composition | | |
|---|---|---|
| - | - t/y | - % |
| Proteins | - 30900 | - 56.7 |
| Fats | - 450 | - 0.8 |
| Salts | - 2350 | - 4.4 |
| Citric Acid | - 125 | - 0.2 |
| Water | - 20600 | - 37.9 |
| Total Amounts | - 54425 | - 100 |
| Note that salts (2350 t/y; 44%) are divided into soluble salts 850 t/y (1.6%) and phosphate salts 1,500 t/y (2.8%). Salts are in all 4.4%. | | |

| 2. Fat component with the following composition | | |
|---|---|---|
| - | - t/y | - % |
| Proteins | - 350 | - 1.6 |
| Fats | - 20910 | - 96.3 |
| Salts | - 39 | - 0.2 |
| Citric Acid | - 3 | - 0.0 |
| Water | - 420 | - 1.9 |
| Total Amounts | - 21722 | - 100 |
| Note that salts (39 t/y; 0.2%) are divided into soluble salts 18 t/y (0.1%) and phosphate salts 21 t/y (0.1%). | | |

| 3. Salt component with the following composition | | |
|---|---|---|
| - | - t/y | - % |
| Proteins | - 300 | - 1.0 |
| Fats | - 200 | - 0.1 |
| Salts | - 18021 | - 59.5 |
| Citric Acid | - 70 | - 0.2 |
| Water | - 11750 | - 38.6 |
| Total Amounts | - 30421 | - 100 |
| Note that salts (18,021 t/y; 59.5%) are divided into soluble salts 480 t/y (1.6%) and phosphate salts 17,62 t/y (57.9%). | | |

| 4. Aqueous component with the following composition | | |
|---|---|---|
| - | - t/y | - % |
| Proteins | - 450 | - 1.4 |
| Fats | - 200 | - 0.6 |
| Salts | - 1270 | - 4.0 |
| Citric Acid | - 202 | - 0,6 |
| Water | - 29710 - | 93.4 |
| Total Amounts | - 31832 - | 100 |
| Note that salts (1,270 t/y 4%) are divided into soluble salts 1,252 t/y (3.9%) and phosphate salts 18 t/y (0.1%). | | |

### EXAMPLE 2 - Separation of the components of a waste mixture from slaughtering and animal meals

By operating under the same conditions as described in

Example 1, a mixture consisting of 2/3 of slaughtering waste and 1/3 of animal meals having the following composition is used:
- Proteins 42240 t/y (32%);
- Fats 18480 t/y (14%);
- Salts 28600 t/y (21.7%);
- Water 42680 t/y (32.3%).
This mixture consisting of slaughtering waste and animal meals is ground in grinder 31 and submitted to fusion-cleavage at 33 and 34 with 8120 t/y of water and finely ground again in grinder 32 to which citric acid in a saturated aqueous solution 5080 t/y is added.
The four phases in separator (35) are separated thereby obtaining the individual components.

| 1. Protein component with the following composition | | |
|---|---|---|
| | - t/y | - % |
| Proteins | - 4087 | - 57.1 |
| Fats | - 380 | - 0.5 |
| Salts | - 3110 | - 4.3 |
| Citric Acid | - 163 | - 0.2 |
| Water | - 27191 | - 37.9 |
| Total Amounts | - 71631 | - 100 |
| Note that salts (3,110 t/y; 43%) are divided into soluble salts 1,150 t/y (1,6 %) and phosphate salts 1,960 t/y (2,7 %). | | |

| 2. Fat component with the following composition | | |
|---|---|---|
| - | - t/y | - % |
| Proteins | - 460 | - 2.5 |
| fats | - 17760 | - 95.2 |
| Salts | - 47 | - 0.2 |
| Citric Acid | - 38 | - 0,2 |
| Water | - 1356 | - 1.9 |
| Total Amounts | - 18661 | - 100 |
| Note that salts (47 t/y; 0,2%) are divided into soluble salts 22 t/y (0,1%) and phosphate salts 25 t/y (0,1 %). | | |

| 3. Salt component with the following composition | | |
|---|---|---|
| - | - t/y | - % |
| Proteins | - 396 | - 1.0 |
| Fats | - 170 | - 0,4 |
| Salts | - 23720 | - 59.7 |
| Citric Acid | - 90 | - 0,2 |
| Water | - 15380 | - 38.7 |
| Total Amounts | - 39756 | - 100 |
| Note that salts (23,720 t/y; 58%) are divided into soluble salts 650 t/y (1,61 %) and phosphate salts 23.070 t/y (58,1 %). | | |

| 4. Aqueous component with the following composition | | |
|---|---|---|
| - | - t/y | - % |
| Proteins | - 597 | - 3.9 |
| Fats | - 170 | - 1.1 |
| Salts | - 1723 | - 11.4 |
| Citric Acid | - 217 | - 1.4 |
| Water | - 12445 | - 82.2 |
| Total Amounts | - 15152 | - 100 |
| Note that salts (1,723 t/y; 11,4%) are divided into soluble salts 1,698 t/y (11,2%) and phosphate salts 25 t/y (0,2 %). | | |

### EXAMPLE 3 - Treatment of the individual components of the slaughtering waste.

The obtained individual components as set out in Example 1 can be further treated to be then either sent to combustion (protein phase and fat phase) for energy recovery or marketed (salt phase).
In particular the protein component having the composition set out in Example 1 is treated with hot water 16000 t/y and citric acid in a saturated aqueous solution 1500 t/y to yield three component phases, as follows.

| | | |
|---|---|---|
| Protein Mass | - t/y | - % |
| Proteins | - 30700 | - 59.0 |
| Fats | - 350 | - 0.7 |
| Salts | - 470 | - 0.8 |
| Citric Acid | - 145 | - 0.3 |
| Water | - 20400 | - 39.2 |
| Total Amounts | - 52065 | - 100 |

| | | |
|---|---|---|
| Salts | - t/y | - % |
| Proteins | - 50 | - 2.1 |
| Fats | - 30 | - 1.2 |
| Salts | - 1420 | - 58.3 |
| Citric Acid | - 6 | - 0.2 |
| Water | - 930 | - 33.2 |
| Total Amounts | - 2436 | - 100 |

| | | |
|---|---|---|
| Aqueous Mass | - t/y | - % |
| Proteins | - 150 | - 0.9 |
| Fats | - 70 | - 0.4 |
| Salts | - 460 | - 2.6 |
| Citric Acid | - 124 | - 0.7 |
| Water | - 16620 | - 95.4 |
| Total Amounts | - 17424 | - 100 |

The protein mass is dried to yield a dry protein mass having the following composition:

| | | |
|---|---|---|
| Protein Mass | - t/y | - % |
| Proteins | - 30700 | - 93.0 |
| Fats | - 350 | - 1.1 |
| Salts | - 470 | - 1.3 |
| Citric Acid | - 100 | - 0.3 |
| Water | - 1420 | - 4.3 |
| Total Amounts | - 33000 | - 100 |

The fat component obtained as described in Example 1 is washed in a centrifugal machine with 2170 t/y of water to yield the washed fat mass having the following composition:

| | | |
|---|---|---|
| Washed Fat Phase | - t/y | - % |
| Protein | - 30 | - 0.1 |
| Fats | - 20890 | - 99.1 |
| Salts | - 4 | - 0,1 |
| Citric Acid | - 1 | - 0,1 |
| Water | - 176 | - 0.8 |
| Total Amounts | - 21101 | - 100 |

The saline component as described in Example 1 is combined with the salts as above described and dried to yield marketable salts having the following composition:

| | | |
|---|---|---|
| Marketable salt phase | - t/y | - % |
| Phosphate salts | - 19500 | - 89.9 |
| Organic residues | - 600 | - 2.8 |
| Water | - 1590 | - 7.3 |
| Total Amounts | - 21690 | - 100 |

### EXAMPLE 4 - Preparation of the combustible mixture

The "dry protein mass" and "washed fat mass" described in Example 3 are mixed to yield a combustible mixture having the following composition:

| | | |
|---|---|---|
| Combustible Mixture | - t/y | - % |
| Proteins | - 30730 | - 56.8 |
| Fats | - 21240 | - 39.3 |
| Salts | - 434 | - 0.8 |
| Citric Acid | - 101 | - 0.2 |
| Water | - 1596 | - 2.9 |
| Total Amounts | - 54101 | - 100 |

The above described mixture is sent to combustion.

### EXAMPLE 5 - Further treatment of the individual components of the mixture consisting of the slaughtering waste and protein meals.

By operating as described in Example 3 but using the components obtained as described in Example 2 as the starting product, "marketable" salts having the composition as set out below are obtained.

| | | |
|---|---|---|
| Marketable Salt Phase | - t/y | - % |
| Phosphate Salts | - 25530 | - 90.2 |
| Organic Residues | - 720 | - 2.5 |
| Water | - 2080 | - 7.3 |
| Total Amounts | - 28330 | - 100 |

### EXAMPLE 6 - Further treatment of the individual components of the mixture consisting of the slaughtering waste and protein meals

By operating as described in Examples 3 and 4 but using the components obtained as described in Example 2, a "combustible mixture" having the below composition is obtained:

| | | |
|---|---|---|
| Combustible Mixture | - t/y | - % |
| Proteins | - 40303 | - 65.8 |
| Fats | - 18040 | - 29.5 |
| Salts | - 574 | - 0.9 |
| Citric Acid | - 111 | - 0.2 |
| Water | - 2181 | - 3.6 |
| Total Amounts | - 61209 | - 100 |

Just as an indication and therefore in a non-limiting sense, some examples embodying the present invention are proposed. In the tables below the second column reproduces the percentages and the third column the amounts expressed in tons/year.

### EXAMPLE 7: Separation of the components constituting the waste from animal slaughtering in accordance with a preferred embodiment of the present invention in which after hydrolysis a step of physical separation of the phosphate salts and a deproteinizing step are provided.

A process for treatment of waste from slaughtering having the following composition by weight is hereinafter described:
- PROTEINS 17.5 17,500
- FATS 17.5 17,500
- PHOSPHATE SALTS 15.0 15,000
- WATER 50.0 50,000
- Total Amount 100.0 100,000

To such a mass, after grinding and by the described process, 100,000 t/y of water and 5,000 t/y of citric acid are added. The obtained mixture will be submitted to hydrolysis in mixer 32, Fig. 1, under pressure, and the mixture will have the following composition:
- PROTEINS 8.5 17,500
- FATS 8.5 1 7,500
- PHOSPHATE SALTS 7.3 15,000
- CITRIC ACID 2.4 5,000
- WATER 73.3 150,000
- Total Amount 100.0 205,000

After high-pressure hydrolysis the mixture, by adiabatic expansion, will lose about 15% of its water whereas the protein fraction will be hydrolysed into components of molecular weight smaller than 10,000 Daltons, i.e. it will be mostly solubilised in the hydrolysis water and therefore will have the following mass composition to be sent to the subsequent steps for separation of the components:
- PROTEINS 9.5 17,300
- FATS 9.6 17,500
- PHOSPHATE SALTS 8.2 15,000
- ORGANIC MATTER a) 2.6 4,700
- WATER 70.1 127,500
   100.0 182,000

The water eliminated by adiabatic expansion will carry along a certain amount of the protein fraction and citric acid, which citric acid in the process in progress is converted into an organic substance (a) as stated in the above table.

The water, after condensation, will be used again in the hydrolysis process. The phosphate salts present in the hydrolysis mixture have sizes varying from few microns to about 10 mm. This depends on the fact that grinding of the waste from slaughtering at the beginning has difficulties of physical nature, so that obtaining very small particle sizes of the bones present in the mass is too expensive and almost impossible. Therefore, bone phosphates have sizes that for example are by 60% larger than 1 mm.

A separation step, Fig. 5, carried out in a device 120, consists of preliminary removal of phosphates of large size, making the subsequent separation step in a two-phase decanter 88, Fig. 6, more effective.

The preliminary separation or pre-separation process therefore consists in sending the hydrolysis mixture from mixer 32 into a closed tunnel 120a where a vibrating belt with a grid 76, 78a and 78b operates. For example, the grid has meshes with openings of about 1 mm²/mesh.

The grid 76, suitably sized, receives the reaction mixture from mixer 32 through the pumping means 19. The reaction mixture is transversely distributed on the moving belt 76 through means 78a and 78b.

While the liquid portion of the mixture is collected in an appropriate collecting vessel 121, placed under the grid 76, the mixture portion still in the upper part will be impinged on, as it moves forward, by steam jets 75 for the purpose of completely separating the fat and protein residues from the phosphates.

At the end of tunnel 120a the washed phosphates fall into an appropriate hopper and are removed therefrom by Archimedean-screw transportation means 81.

The steam emitted from means 75 and filling tunnel 120a is conveyed, by a sucking device 122, to a condensation system 80 and then joined to the fluid portion passed through the grid.

The sufficient steam amount is about 1% of the flow rate being fed, i.e. about 1,820 t/y.

Then, as described, separation of the two components, component 1 and component 2, which have the following compositions, is carried out.

### COMPONENT 1: FLUID PHASE WITH PHOSPHATES OF PARTICLE SIZE SMALLER THAN 1 MM, FOR EXAMPLE

- PROTEINS 10.0 17,000
- FATS 10.3 g17,410
- PHOSPHATE SALTS 3.5 6,000
- ORGANIC MATTER 2.7 4,590
- WATER 73.5 124,500
   100.0 169,500

### COMPONENT 2: SOLID PHASE, PHOSPHATES OF PARTICLE SIZE LARGER THAN 1 MM, FOR EXAMPLE

- (SOLUBLE) PROTEINS 2.4 300
- FATS 0.7 90
- PHOSPHATE SALTS 72.0 9,000
- CITRIC ACID 0.9 110
- WATER 24.0 3,000
   100.0 12,500

Component 1 will be sent to the separation step, preferably in a two-phase decanter, Fig. 6, while component 2 will be submitted to a subsequent hydrolysis with sulphuric acid to obtain mono- and di-calcium phosphates.

Subsequently, the process contemplates a separation of component 1, preferably by use of a two-phase decanter. In this process stage the phosphate salts will be separated from the organic protein and fat mass in the following way:

### COMPONENT 1A - ORGANIC PROTEIN AND FAT PHASE

- PROTEINS 10.4 16,300
- FATS 11.1 17,410
- PHOSPHATE SALTS 0 0
- ORGANIC MATTER 2.8 4,390
- WATER 75.7 119,000
   100.0 157,100

### COMPONENT 2A - PHOSPHATE SALT PHASE

- PROTEINS 5.6 700
- FATS 0 0
- PHOSPHATE SALTS 48.4 6,000
- ORGANIC MATTER 1.6 200
- WATER 44.4 5,500
   100.0 12,400

Component 1A will be submitted to deproteinizing and subsequent phase separation: proteins, fats, water.

Component 2A and component 2 from the preceding separation with a grid, will be subsequently treated with sulphuric acid to convert the tri-calcium phosphate to mono- and di-calcium phosphates.

Subsequently, the process contemplates a step of deproteinizing component 1A followed by separation in a three-phase decanter 97.

In this stage the organic protein and fat mass 84 having the stated composition after separation in a two-phase decanter 88 is treated with a deproteinizing agent 87 in a continuous mixer 94.

Preferably, said deproteinizing agent 87 is an acid substance, such as an acid substance like the organic and inorganic acids, in an amount varying from 1 to 20% by weight depending on the force of the acid employed.

For example, oxalic acid can be employed in an amount included between 5 and 12%, preferably in a concentration of about 10% of an oxalic-acid saturated solution.

The acid solution causes separation of the suspended proteins and precipitation of those in a solution form.

Solubility of the oxalic acid is of 12% in water.

On coming out of the precipitation reactor 94 and 95, the following situation appears:
- PROTEINS IN A SOLUTION 0.9 1,570
- PRECIPITATED PROTEINS 9.6 16,610
   WITH OXALIC ACID
   INCORPORATED
- FATS 10.1 17,410
- ORGANIC MATTER 2.5 4,390
- WATER 76.9 132,830
   100.0 172,810

The above mass 97 is sent to a three-phase decanter thereby obtaining separation of the following components:

### COMPONENT A - ORGANIC PROTEIN PHASE HAVING THE FOLLOWING COMPOSITION

- PROTEINS IN A SOLUTION AND IN A SOLID STATE WITH ACID INCORPORATED 48.4 16,930
- FATS 0 0
- ORGANIC MATTER 2.5 890
- WATER 49.1 17.180
   100.0 35,00

### COMPONENT B - FAT MATTER PHASE

- PROTEINS 0.3 55
- FATS 98.0 17,410
- ORGANIC MATTER 0.2 35
- WATER 1.5 265
   100.0 17,765

### COMPONENT C - WASTE WATER PHASE

- PROTEINS 1.0 1,250
- FATS 0 0
- ORGANIC MATTER 2.9 3,465
- WATER 96.1 115,330
   100.0 120,045

Component A can be directly sent to combustion together with component B, the fuel mass of the following composition being obtained:

| Commercial Mixture | Component A - t/y | Component B - t/y | TOTAL t/y | AMOUNT % | PC Kcal/Kg |
|---|---|---|---|---|---|
| PROTEINS | 42,155 | 50 | 42,250 | 40.9 | 5,500 |
| FATS | 0 | 15,800 | 15,800 | 15.3 | 9,000 |
| ORGANIC MATTER | 3,935 | 30 | 3,965 | 3.8 | 2,500 |
| WATER | 41,060 | 240 | 41,300 | 40.0 | (650) |
| **TOTAL AMOUNTS** | **87,150** | **16,120** | **103,270** | **100.0** | **3,461** |

Alternatively Components A and B can be treated separately for marketing purposes, i.e. Component A may be submitted to concentration and/or drying, while Component B can be submitted to continuous washing in a centrifuge with hot water and subsequent drying.

Waste waters are recycled by hydrolysis while the excess matter is sent to biological purification.

### EXAMPLE 8: Separation of the components constituting the protein meals of animal origin by a preferred embodiment of the present invention comprising the step of pre-separating the phosphate salts and the deproteinizing step.

A process for treatment of protein meals of animal origin which have the following composition is hereinafter described:
- PROTEINS 44.0 44,000
- FATS 16.0 16,000
- PHOSPHATE SALTS 33.0 33,000
- WATER 7.0 7.000
- Total Amount 100.0 100,000

100,000 t/y of water and 10,000 t/y of citric acid are added to this mass, after grinding (if necessary) and by the described process, thereby obtaining the mixture to be submitted to hydrolysis under pressure which will have the following composition:
- PROTEINS 14.7 44,000
- FATS 5.3 16,000
- PHOSPHATE SALTS 11.0 33,000
- CITRIC ACID 3.3 10,000
- WATER 65.7 197,000
   100.0 300,000

After high-pressure hydrolysis, the mixture by its adiabatic expansion loses about 15% of its water, whereas the protein fraction will be hydrolysed into components of molecular weight smaller than 10,000 Daltons, i.e. will be mostly solubilized in the hydrolysis water and therefore there will be the following mass composition to be sent to the subsequent steps of separating the components:
- PROTEINS 16.1 43,500
- FATS 5.9 16,000
- PHOSPHATE SALTS 12.2 33,000
- ORGANIC MATTER 3.5 9,400
- WATER 62.3 168,600
   100.0 270,500

The water eliminated by adiabatic expansion will carry along a certain amount of the protein fraction and the citric acid, which citric acid, submitted to hydrolysis too, will be converted to an organic substance as stated in the table.

The water after condensing will be reused in the hydrolysis process.

The phosphate salts present in the hydrolysis mixture have sizes varying from few microns to about 10 mm.

This depends on the fact that grinding of the slaughtering waste at the beginning has difficulties of physical nature so that obtaining of very small particles sizes of the bones present in the mass is too expensive and almost impossible.

The practical ascertainment that bone phosphates have sizes larger than 1 mm by about 60% has made it possible to adopt a separation strategy consisting of a preliminary removal of the phosphates of larger sizes, so that the subsequent separation step in a two-phase decanter is made highly effective.

The preliminary separation process therefore consists in sending the hydrolysis mixture, after adiabatic expansion, into a closed tunnel where a vibrating belt with a grid having meshes of about 1 mm²/mesh operates.

The grid, suitably sized, receives the reaction mixture transversely distributed on the moving belt.

While the liquid portion of the mixture is collected in an appropriate collecting vessel disposed under the grid, the portion still at the upper part will be impinged on, as it moves forward, by steam jets aiming at completely separating the fat and protein residues from the phosphates.

Therefore at the tunnel end, the washed phosphates will drop into an appropriate hopper and then will be moved therefrom by an Archimedean-screw transportation means.

The steam utilised for the above operation and filling the tunnel is conveyed, by a sucking device, to a condensation system and then joined to the fluid portion passed through the grid.

The amount of sufficient steam is calculated to be about 1% of the flow rate being fed, i.e. about 2,705 t/y.

Then the two components as stated above, having the following compositions, are separated:

### COMPONENT 1 - FLUID PHASE WITH PHOSPHATES OF PARTICLE SIZE SMALLER THAN 1 MM

- PROTEINS 17.7 42,830
- FATS 6.5 15,800
- PHOSPHATE SALTS 5.4 13.000
- ORGANIC MATTER 3.8 9,150
- WATER 66.6 161,500
   100.0 242,500

### COMPONENT 2 - SOLID PHASE, PHOSPHATES OF PARTICLE SIZE LARGER THAN 1 MM

- (SOLUBLE) PROTEINS 2.4 670
- FATS 0.7 200
- PHOSPHATE SALTS 71.4 20,000
- CITRIC ACID 0.9 250
- WATER 24.6 6,880
   100.0 28,000

Component 1 will be sent to separation in a two-phase decanter, whereas Component 2 will be submitted to subsequent hydrolysis with sulphuric acid for obtaining mono- and di-calcium phosphates.

### SEPARATION OF COMPONENT 1 IN A TWO-PHASE DECANTER

In this process stage the phosphate salts are separated from the organic protein and fat mass in the following manner:

### COMPONENT 1A - ORGANIC PROTEIN AND FAT PHASE

- PROTEINS 19.2 41,330
- FATS 7.3 15,800
- PHOSPHATE SALTS 0 0
- ORGANIC MATTER 4.0 8,720
- WATER 69.5 149,750
   100.0 215,600

### COMPONENT 2A - PHOSPHATE SALT PHASE

- PROTEINS 5.6 1,500
- FATS 0 0
- PHOSPHATE SALTS 48.3 13,000
- ORGANIC MATTER 1.6 430
- WATER 44.5 11,970
   100.0 26,900

Component 1A will be submitted to deproteinizing and subsequent phase separation: proteins, fats, water.

Component 2A and Component 2 of the preceding separation with a grid will be subsequently treated with sulphuric acid for the purpose of converting the tri-calcium phosphate to mono- and di-calcium phosphates.

### DEPROTEINIZING OF COMPONENT 1A AND SEPARATION IN A THREE-PHASE DECANTER

The organic protein and fat mass having the stated composition after separation in a two-phase decanter is treated in a continuous mixer with about 10% of a saturated solution of oxalic acid.

The acid solution causes separation of the suspended proteins and precipitation of the proteins in a solution form.

Solubility of the oxalic acid is of 12% in water.
On coming out of the precipitation reactor, the following situation appears:
- PROTEINS IN A SOLUTION 0.9 2,130
- PRECIPITATED PROTEINS WITH OXALIC ACID INCORPORATED 17.6 41,790
- FATS 6.7 15,800
- ORGANIC MATTER 3.7 8,720
- WATER 71.1 168,720
   100.0 237,160

The above mass is sent to a three-phase decanter thereby obtaining separation of the following Components:

### COMPONENT A - ORGANIC PROTEIN PHASE HAVING THE FOLLOWING COMPOSITION

- PROTEINS IN A SOLUTION AND IN A SOLID STATE WITH INCORPORATED ACID 48.4 42,155
- FATS 0 0
- ORGANIC MATTER 4.5 3,935
- WATER 47.1 41,060
   100.0 87,150

### COMPONENT B - FAT MATTER PHASE

- PROTEINS 0.2 50
- FATS 98.1 15,800
- ORGANIC MATTER 0.2 30
- WATER 1.5 240
   100.0 16,120

### COMPONENT C - WASTE WATER PHASE

- PROTEINS 1.3 1,715
- FATS 0 0
- ORGANIC MATTER 3.6 4,755
- WATER 95.1 127,420
   100.0 133,890

Component A can be directly sent to combustion together with Component B thereby obtaining the fuel mass with the following composition:

| Commercial Mixture | Component A - t/y | Component B - t/y | TOTAL t/y | AMOUNT % | PC Kcal/Kg |
|---|---|---|---|---|---|
| PROTEINS | 16,930 | 55 | 16,985 | 32.2 | 5,500 |
| FATS | | 17,410 | 17,410 | 33.0 | 9,000 |
| ORGANIC MATTER | 890 | 35 | 925 | 1.7 | 2,500 |
| WATER | 17,180 | 265 | 17,445 | 33.1 | (650) |
| **TOTAL AMOUNTS** | **35,000** | **17,765** | **52,765** | **100.0** | **4,568** |

## Claims

1. A process for treatment of an organic protein mass of animal origin **characterised in that** it comprises the following steps:
a) carrying out hydrolysis of the organic protein mass of animal origin;
b) separating from the hydrolysed organic protein mass, a first solid component containing the phosphate salts and a second fluid component containing the organic protein mass;
- deproteinizing the organic protein mass to obtain a protein mass and a fat mass from said organic protein mass.

2. A process as claimed in claim 1, **characterised in that** said first solid component is physically separated from said second component.

3. A process as claimed in claim 1, **characterised in that** the organic protein mass is deproteinized by use of an acid deproteinizing agent.

4. A process as claimed in claim 1, **characterised in that** said organic protein mass comprises waste from animal slaughtering.

5. A process as claimed in claim 1, **characterised in that** said organic protein mass comprises animal protein meals.

6. A process as claimed in claim 1, **characterised in that** said organic protein mass comprises a mixture containing waste from animal slaughtering and animal protein meals.

7. A process as claimed in at least one of the preceding claims, **characterised in that** said organic protein mass of animal origin is hydrolysed in an aqueous solution comprising an acid substance.

8. A process as claimed in claim 4 or 6, **characterised in that** waste from slaughtering or mixtures thereof are previously pre-treated according to the following steps:
- grinding the waste from slaughtering or mixtures thereof to obtain a uniform mass;
- mixing said uniform mass in an aqueous medium to given temperature and pressure values to obtain a suspended organic protein mass.

9. A process as claimed in claim 5, **characterised in that** the animal protein meals are mixed in an aqueous medium to given temperature and pressure values to obtain a suspended protein mass.

10. A process as claimed in at least one of the preceding claims, **characterised in that** a combustible mixture comprising the protein mass and fat mass in a ratio by weight included between 1:10 and 10:1 is burnt in a burner.

11. Use of the process as claimed in claims 1 to 9 for production of electrical energy.

12. Equipment for treatment of an organic protein mass of animal origin **characterised in that** it comprises:
- mixing means (30) for said organic protein mass;
- grinding means (32) for said organic protein mass to carry out a hydrolysis of said organic protein mass;
- separation means (35) for separating a first solid component containing the phosphate salts from a second fluid component;
- means for deproteinizing said second component to obtain a protein mass and a fat mass.
